# EUROPEAN PATENT SPECIFICATION

(11) **EP 2 874 950 B1**
(45) Date of publication and mention of the grant of the patent: **24.08.2016**
(21) Application number: 13745456.7
(22) Date of filing: 10.07.2013
(51) Int. Cl.: C02F 1/28, C02F 1/46, B01J 20/20, B01J 20/34, C02F 1/00, C02F 1/44, C02F 101/30, C02F 101/32

(54) **APPARATUS AND METHOD FOR AQUEOUS ORGANIC WASTE TREATMENT**
VORRICHTUNG UND VERFAHREN ZUR BEHANDLUNG VON WÄSSRIGEM ORGANISCHEM ABFALL
APPAREIL ET MÉTHODE DE TRAITEMENT DE DÉCHETS ORGANIQUES AQUEUX

(30) Priority: 17.07.2012 GB 201212676
(43) Date of publication of application: 27.05.2015
(73) Proprietor: Arvia Technology Limited, Daresbury, Cheshire WA4 4FS (GB)
(72) Inventor: BROWN, Nigel, Daresbury Cheshire WA4 4FS (GB); ROBERTS, Edward, Daresbury Cheshire WA4 4FS (GB); EATON, Donald, Daresbury Cheshire WA4 4FS (GB); ADEYEMI, Akinlabi, Daresbury Cheshire WA4 4FS (GB)
(74) Representative: Dauncey, Mark Peter
(86) International application number: PCT/GB2013/051823
(87) International publication number: WO 2014/013224

(56) References cited:
- JP-A- H05 192 652

## Description

The present invention relates to methods and apparatus for the treatment of aqueous organic wastes, particularly but not exclusively aqueous wastes containing organic components and bulk organic wastes that have been dispersed, emulsified or dissolved in water. The present invention has particular, but not exclusive, application in the treatment of organic wastes containing radionuclides.

Many methods have been developed to treat aqueous organic wastes. Prior art methods typically exploit the treatment of aqueous organic wastes through the contacting of the waste with a porous material. Porous materials contain internal pores, into which organic components are either adsorbed or absorbed, depending upon the nature of dissolution of the organic component in the water. Irrespective of the take-up mechanism, the presence of internal pores has negative implications for the regeneration of porous materials. As established in "Electrochemical regeneration of granular activated carbon"; R M Narbaitz, J Cen; Wat. Res. 28 (1994) 1771-1778, the electrochemical regeneration of such materials is limited because electrochemcial oxidation of the adsorbed contaminants can only occur on the external surface of the adsorbent material. Organic components adsorbed or absorbed into the internal pores of the material are not oxidised when exposed to an electric current. Instead, the notoriously expensive regeneration of the porous materials is usually achieved by high energy, thermal exposure over long time scales and sending the loaded porous material to landfill is a more preferable option. For the treatment of organic wastes contaminated with one or more types of radionuclide, the loaded porous material becomes a secondary radioactive waste with additional treatment complexities and cannot be sent to landfill.

The system and method described in UK patent no. GB2470042B obviates or mitigates many of the problems previously associated with the removal of organic components from aqueous waste. The invention described in this patent relates to the treatment of aqueous organic wastes by the adsorption of the organic components followed by subsequent oxidation of the organic components and simultaneous regeneration of the adsorbent, within a single unit, using relatively low power and circumventing the need to dispose of, or thermally regenerate, the material used during treatment.

Organic waste which is contaminated with one or more types of radionuclide is produced during the operation of nuclear power plants. These types of waste are classified according to the concentration of radionuclides contained in the waste and the type of radioactivity that the contained radionuclides emit. Traditionally these wastes are either stored on-site or are sent for incineration. For storage purposes, the storer must have a licence to store radioactive material. The Nuclear Decommissioning Authority has recently issued a £70 billion legacy for the treatment of radioactive wastes and on site storage is no longer a preferable option. For incineration, there are a limited number of incinerators throughout the UK and each incinerator has a limited capacity for the incineration of material containing radioactivity. Consequently organic wastes containing intermediate levels of radioactivity are expensive to incinerate and only small volumes at a time can be incinerated. Other conventional treatment options for the treatment of radioactive waste are not suitable for organic waste, for example the long term storage in the form of grouting or cementation, because the organics have a tendency to leach out into the environment, distributing radioactivity. There is therefore a need to develop improved processes and apparatus for the treatment of radioactive organic waste. International patent application WO2010/149982 describes methods for the treatment of such waste however further refinement and improvement of these methods is desirable.

During the further development of the systems described in UK patent no. GB2470042B and International patent application WO2010/149982 it has become apparent that their performance in certain circumstances may be enhanced by the use of an external chemical dosing tank to maintain a low pH within the treatment zone for optimal performance. While performance advantages can be obtained by using an external means to maintain a low pH it would be desirable to obviate the need to provide the dosing tank since this adds to the cost and complexity of the overall decontamination process.

In prior art systems, such as those described in UK patent no. GB2470042B and International patent application WO2010/149982, the cathode is typically provided in an isolated cathode compartment fed with an electrolyte to ensure a high conductivity and therefore a low voltage between the electric current feeders. The electrode assembly consists of a micro-porous membrane, a cathode and chemical dosing system built into one inseparable, sealed "unit" to prevent catholyte leakage or the migration of adsorbent material from the anode compartment through to the cathode compartment. By way of example, one electrode assembly of size 500 mm x 500 mm may weigh approximately six kilograms and there can be a number of assemblies in any one unit. If there is a fault with an individual part of the assembly, the entire assembly must be removed from the treatment tank and replaced. To maintain high conductivity in the cathode compartment, a membrane defining micro-pores maintains a high concentration of ionic components in the cathode compartment. The small diameter of the micro-pores prevents the rapid diffusion of ionic components from the solution in the cathode compartment into the solution in the anode compartment, however, suitable micro-porous materials can be unstable in alkaline conditions, which can add additional complexity to the overall treatment process. Furthermore the micro-porous material typically cannot prevent the osmosis of water from the anode compartment into the cathode compartment, which dilutes the electrolyte solution in the cathode compartment and necessitates the addition of further electrolyte throughout operation of the system. There is also the possibility of hydrogen accumulating in the electrode assembly due to the catholyte compartment being isolated. Conveniently, the chemical dosing system may be used to transport away any hydrogen that is produced, however, as mentioned above it would be desirable to obviate the need for the dosing system to reduce the cost and complexity of the system.

In prior art methods employing electrochemical regeneration of the adsorbent, when the electric current is applied, charged inorganic species in the aqueous organic waste migrate to the oppositely charged electric current feeder and some species undergo electrodeposition at the electric current feeder, converting from solution phase species to solid phase species, for example, copper. This can lead to a build-up of electrodeposited inorganic species on the electric current feeders, which, when working with radioactively contaminated organic wastes is particularly undesirable because of the risk of criticality from the electrodeposition of certain radionuclides.

An object of the present invention is to obviate or mitigate one or more of the problems currently associated with existing methods for treating contaminated fluids.

According to a first aspect of the present invention there is provided apparatus for the treatment of an aqueous organic waste liquid to provide a treated liquid containing less organic matter, the apparatus comprising
a treatment reservoir defining first and second treatment zones separated by a porous membrane,
carbon-based adsorbent material capable of electrochemical regeneration provided in said first and second treatment zones,
an agitator operable to distribute the carbon-based adsorbent material in aqueous organic waste liquid contained in each of the first and second treatment zones,
a first electric current feeder operably connected to the carbon-based adsorbent material in the first treatment zone and a second electric current feeder operably connected to the carbon-based adsorbent material in the second treatment zone, and
a controller to operate the first and second electric current feeders to pass an electric current through the carbon-based adsorbent material in the first and second treatment zones in one direction to regenerate the carbon-based adsorbent material in one of the first and second treatment zones and to then reverse the direction of the current applied to the carbon-based adsorbent material in the first and second treatment zones to regenerate the carbon-based adsorbent material in the other of the first and second treatment zones.

According to a second aspect of the present invention there is provided a method for the treatment of an aqueous organic waste liquid to provide a treated liquid containing less organic matter, the method comprising
admitting the aqueous organic waste liquid into first and second treatment zones of a treatment reservoir, the first and second treatment zones being separated by a porous membrane, each treatment zone containing carbon-based adsorbent material capable of electrochemical regeneration;
distributing the carbon-based adsorbent material in the aqueous organic waste liquid within each treatment zone;
allowing the carbon-based adsorbent material to settle within each treatment zone;
operating first and second electric current feeders operably connected to the first and second treatment zones respectively to pass an electric current in one direction through the carbon-based adsorbent material within each treatment zone to regenerate the carbon-based adsorbent material in one of the first and second treatment zones; and
operating the first and second electric current feeders to reverse the direction of the current applied to the carbon-based adsorbent material in the first and second treatment zones to regenerate the carbon-based adsorbent material in the other of the first and second treatment zones.

In a preferred embodiment of the first and/or second aspects of the present invention the apparatus and method can be adapted for the treatment of aqueous organic waste containing radionuclides without having to employ incineration or other undesirable prior art treatment options. In this way, radionuclides contained in the organic component of the aqueous organic waste are transferred into an aqueous phase upon oxidation of the organic components. Acceptable technologies are already available to treat aqueous solutions of radionuclides and so the secondary radioactive waste produced by using the apparatus and/or method of the present invention can be conveniently and cost effectively treated using conventional methods. Moreover, the regeneration of the adsorbent material ensures that there is minimal radioactively contaminated secondary waste. Thus, in a preferred embodiment the aqueous organic waste liquid contains radioactive species and said radioactive species are preferably present in said treated liquid. The present invention therefore offers a solution to the decontamination of radioactive organic waste that previously had no viable treatment options other than the process described in International patent application WO2010/149982.

The treated liquid, containing a lower concentration of organic components, can either be subjected to one or more further treatment cycles or it can be removed from the treatment reservoir. Operation of the apparatus and/or method of the first and second aspects of the present invention enables the maintenance of a low pH in the treatment tank, which is the optimal pH level for this type of treatment process. Moreover, low pH conditions are preferable when treating organic waste containing radionuclides because many radionuclides are more soluble in acidic conditions than netural or alkaline conditions.

The first aspect of the present invention provides apparatus for the treatment of an aqueous organic waste and is eminently suitable for the treatment of individual quantities of such waste in a batch rather than a continuous process. The treatment reservoir may be in the form of a tank or a chamber. A lower section of the treatment reservoir may define a smaller horizontal cross-sectional area than an upper section of the treatment reservoir, which may facilitate settling of the carbon-based adsorbent following agitation. The first and second treatment zones may be defined within the treatment reservoir so as to be provided at any desirable location with respect to the treatment reservoir and with respect to one another provided the porous membrane defines an interface between the two treatment zones. It will be appreciated that the treatment reservoir may define two or more treatment zones with a porous membrane defining an interface between neighbouring treatment zones. The porous membrane may be configured to prevent carbon-based adsorbent material from passing between the first and second treatment zones but to permit water and/or ionic species to pass between the first and second treatment zones. In a preferred embodiment, the treatment reservoir contains two parallel or side-by-side beds of the carbon-based adsorbent material capable of electrochemical regeneration. Each treatment zone may be provided with a dedicated agitator to agitate the carbon-based adsorbent material contained within its respective treatment zone. The agitator may be adapted to fluidise the carbon-based adsorbent material. The or each agitator preferably comprises one or more nozzles, inlets or apertures defined by a wall, preferably the base, of the respective treatment zone through which a fluid under pressure can be admitted into the carbon-based adsorbent material retained in the respective treatment zone. The agitator preferably further comprises a chamber under the treatment reservoir defining said one or more inlets and a pump to deliver fluid under pressure through said inlet(s). The fluid may be air and/or aqueous organic waste liquid requiring treatment.

The second aspect of the present invention provides a method for the treatment of aqueous organic waste. When the electric current is fed through the beds of adsorbent material the bed adjacent to the positive electric current feeder may be considered to behave as an anode and the bed adjacent to the negative electric current feeder may be considered to behave as a cathode. It is preferable to maintain the applied electric current in this first direction for a sufficient period of time to oxidise organic components adsorbed on to the adsorbent material from the aqueous organic waste and to thereby regenerate the adsorbent material. During this process aqueous protons are produced in the bed behaving as an anode and aqueous hydroxide ions are produced in the bed behaving as the cathode. Reversal of the direction of the applied current switches the formerly positive current feeder so that it is a negative current feeder and the formerly negative current feeder so that it is positive. As a result the bed of adsorbent material that formerly behaved as an anode now behaves effectively as a cathode and the bed that formerly behaved as a cathode now behaves as an anode. This then enables organic components from the liquid that have been adsorbed on to the adsorbent material in the bed now acting as an anode to be oxidised and the adsorbent material in that bed regenerated.

The steps of distributing the carbon-based adsorbent material in the aqueous organic waste liquid and allowing the carbon-based adsorbent material to settle may be repeated one or more times to remove organic matter from the aqueous organic waste liquid prior to operating the first and second electric current feeders to reverse the direction of the current applied to the carbon-based adsorbent material.

Alternatively or additionally, the steps of distributing the carbon-based adsorbent material in the aqueous organic waste liquid and allowing the carbon-based adsorbent material to settle may be repeated one or more times to remove organic matter from the aqueous organic waste liquid prior to removing the treated liquid from the treatment reservoir.

Preferably the or each cycle of distribution and settling steps is effected over a time period of 1 to 60 minutes. Where more than one cycle is employed, each cycle may be effected over the same time period or different time periods may be employed. In a preferred embodiment the or each cycle of distribution and settling steps is effected over a time period of around 20 minutes.

Distribution of the carbon-based adsorbent material is preferably effected by admitting a fluid under pressure into the carbon-based adsorbent material. Any suitable fluid may be used, for example the fluid may comprise air and/or aqueous organic waste liquid in need of treatment.

The current feeders may be operated to provide any desirable pH in the treated liquid. For example they may be operated to provide an alkaline pH, i.e. a pH greater than 7. Alternatively, in a preferred embodiment the current feeders are operated to provide an acidic pH, i.e. a pH of less than 7, in the treated liquid, more preferably a pH of around 1 to 4 in the treated liquid.

Charged inorganic species are generated during the passage of the electric current through the carbon-based adsorbent material in the first and second treatment zones. The current feeders may be operated to minimise the electrodeposition of said charged inorganic species on the current feeders during operation.

In a preferred embodiment the first and second current feeders are operated to pass the electric current through the carbon-based adsorbent material in the treatment zones in said one direction for a time period of 1 to 240 minutes, and/or in said other direction for 1 to 240 minutes. The electric current may be passed through the carbon-based adsorbent in each direction for a similar time period, such as around 120 minutes, 5 minutes or different time periods may be employed. Where different time periods are employed for each direction, the time period over which the electric current is applied in either direction may vary throughout the period over which treatment is being effected or it may remain the same.

The first and second current feeders may be operated to apply any suitable electric current density to the carbon-based adsorbent material in the first and second treatment zones to effect the desired level of oxidation of adsorbed organic matter. An electric current density of 1 to 30 mAcm⁻² may be employed, more preferably an electric current density of around 6 to 20 mAcm⁻², and most preferably an electric current density of around 8 mAcm⁻² may be applied by the current feeders to the carbon-based adsorbent material in each treatment zone.

The first and second current feeders may be operated to apply any suitable electric current to the carbon-based adsorbent material in the first and second treatment zones to effect the desired level of oxidation of adsorbed organic matter. An electric current of 1 to 10 amps may be employed, in one embodiment an electric current of around 5 amps may be applied by the current feeders to the carbon-based adsorbent material in each treatment zone.

It will be appreciated that the ability to treat aqueous organic wastes whilst periodically reversing the direction of the electric current provides a method with significant advantages as compared to prior art methods, even those described in UK patent no. GB2470042 and International patent application WO2010/149982, which themselves represented significant advances over earlier methods.

As mentioned above, aqueous proton species are produced in the bed acting as an anode and aqueous hydroxide species are produced in the bed acting as the cathode. During operation, the aqueous proton and hydroxide species are distributed in the liquid undergoing treatment resulting in the liquid possessing a net acidic pH, which is optimal for the performance of the first and second aspects of present invention. The first and second aspects of the present invention thus enable the apparatus to operate without an external chemical dosing tank because the periodic reversing of the electric current maintains a consistent pH within the treatment system. The elimination of a chemical dosing tank reduces the complexity of the system, eliminates the need for chemicals to be delivered to the site on which the equipment is installed, and minimises the secondary waste associated with the treatment process.

Another advantage of the system of the present invention over the systems described in the prior art is that a variety of different materials can be used for the porous membrane or divider which separates the first and second treatment zones. In the systems described in UK patent no. GB 2470042 and International patent application WO2010/149982 the solution in the cathode compartment has a high conductivity, whereas the solution in the anode compartment does not need to be conductive. To maintain high conductivity in the cathode compartment, a porous membrane material containing micro-pores maintains a high concentration of ionic components in the cathode compartment. The necessarily small diameter of the micro-pores prevents the rapid diffusion of ionic components from the solution in the cathode compartment into the solution in the anode compartment. Preferred materials containing micro-pores can be unstable in alkaline conditions, adding to the complexity of the treatment process. Furthermore the micro-porous material typically used cannot prevent the osmosis of water from the anode compartment into the cathode compartment, which results in dilution and an increase in the volume of the solution in the cathode compartment. The solution in the cathode compartment becomes a secondary waste upon completion of the treatment, so an increase in volume of said solution is not desirable. In the first and second aspects of the present invention since both treatment zones contain adsorbent material, and a quantity of aqueous organic waste for treatment is distributed homogenously throughout the two treatment zones, there are no issues associated with the mixing of the liquid in the treatment zone that behaves effectively as a "cathode compartment" and the liquid in the other treatment which behaves effectively as an "anode compartment". Consequently, a range of different membrane materials can be used in the apparatus and method of the first and second aspects of the present invention enabling more stable materials with a larger pore diameter to be used if desired. The benefit of using a material with a larger pore diameter is that it offers a lower electrical resistance and therefore a lower voltage across the beds of adsorbent material.

A further advantage of the method of the present invention over the methods described in UK patent no. GB 2470042 and International patent application WO2010/149982 is that it can operate at low power and therefore low operating cost, without the presence of an isolated catholyte compartment. Low power operation is a consequence of a low voltage between the electric current feeders. Voltage is inversely proportional to solution conductivity and in the systems described in the prior art the isolated catholyte system provides a high conductivity and therefore a low voltage between the electric current feeders. An implication of the elimination of the catholyte system in the present invention is a decrease in conductivity of the solution between the electric current feeders. However, as established in "Electrochemical regeneration of a carbon-based adsorbent loaded with crystal violet dye"; N W Brown, E P L Roberts, A A Garforth and RAW Dryfe; Electrachemica Acta 49 (2004) 3269-3281, cell voltage is proportional to the electric current density, which is a measure of electric current per unit area of the electrode and is therefore inversely proportional to the surface area of the electrode. In the "cathode compartment" of the present invention the bed of adsorbent material effectively behaves as a cathode which significantly increases the effective surface area of the "cathode" as compared to the cathode used in prior art methods, thereby lowering the current density and therefore affording a lower voltage. Consequently the present invention facilitates low power operation without the need for a separate catholyte compartment. That being said, since a low voltage across the beds of adsorbent material is preferable it may still be desirable to add an electrolyte to the bed of adsorbent material behaving as the high surface area cathode. The first and second aspects of the present invention allow for operation without an electrolyte but do not negate the use of an electrolyte if desired to lower the applied voltage beyond that achievable using the apparatus and method of the first and second aspect of the present invention. The addition of an electrolyte is optional for the treatment of radioactive organic wastes because the water is re-used in the treatment cycle and so the volume of electrolyte required is extremely low compared to a continuous system for example whereby an electrolyte may need to be continuously added to the liquid undergoing treatment.

A further advantage of the apparatus and method of the first and second aspects of the present invention over prior art systems, in particular those described in UK patent no. GB 2470042 and International patent application WO2010/149982 is that they allow a simplification of the complex electrode assemblies previously employed. As explained above, many prior art systems utilise an electrode assembly consisting of a micro-porous membrane, cathode and chemical dosing system built into one inseparable, sealed "unit". As a result, if there is a fault with an individual part of the assembly the entire assembly must be removed from the treatment reservoir and replaced. Moreover, in view of the sealing of the catholyte compartment there is also a risk of hydrogen building up in the electrode assembly, which is typically handled by the chemical dosing system. In the apparatus of the first aspect of the present invention the aforementioned sealed "unit" is not necessary because there is no chemical dosing system or need to isolate the cathode compartment. Furthermore, since there are no negative implications associated with the mixing of the aqueous liquids in the first and second treatment zones or with the migration of the adsorbent material there is no need to seal the porous membrane in betweeen the two treatment zones. Instead of the complicated, sealed "unit" currently employed, it is possible to insert a more simple porous membrane between the two beds of adsorbent material. By way of example, a porous membrane that is 500 mm x 500 mm typically weighs only around 0.2 kg and the overall cost of the system is approximately 20 times lower than a system containing an electrode assembly in the form of the sealed "unit" described above. If there is a fault with any individual part of the treatment apparatus, the faulty item can be replaced individually, rather than having to replace the entire assembly. Additionally, the risk of hydrogen building up within the assembly is eliminated because the treatment zone containing the bed of adsorbent functioning as the "catholyte compartment" no-longer needs to be isolated.

Another advantage of the apparatus and method of the first and second aspects of the present invention over the methods described in UK patent no. GB 2470042 and International patent application WO2010/149982 is that the build-up of electrodeposited inorganic components from the aqueous organic waste liquid is reduced or eliminated by periodically reversing the applied current. As a result, any inorganic components that become electrodeposited during the application of the electric current in a first direction are re-dissolved into the aqueous phase when the electric current is applied in the reverse direction. It may be desirable to optimise the process to ensure that the direction of the electric current is reversed at the correct time interval(s) to reduce or avoid the partial build-up of electrodeposited inorganic components during each individual phase of the regeneration cycle, i.e. during the application of the current in any single direction.

During the adsorption stage of a treatment cycle the beds of adsorbent material are agitated for a sufficient period of time to distribute the adsorbent material within the aqueous organic waste and adsorb organic components therefrom. At the end of the agitation period the agitation ceases, allowing the beds of material to settle. During this settlement period the adsorbent will separate from the aqueous organic waste. It will be appreciated that the degree of separation depends upon the length of time allowed. During and/or after settlement of the loaded adsorbent material, i.e. adsorbent material carrying adsorbed organic components, the electric current is applied which causes oxidation of the adsorbed organic components in the treatment zone behaving effectively as an "anode compartment", producing gaseous products and water, and thereby regenerating the adsorbent material and restoring its ability to adsorb further quantities of organic component. It is possible to adjust the time scale according to the degree of contamination of the aqueous organic waste being treated.

At different stages of the regeneration period, the electric current can be adjusted. For example, at the beginning of the regeneration period, only a very thin layer of the loaded adsorbent material will have settled so a smaller electric current is required than later in the regeneration period when a substantial quantity of the loaded adsorbent material will have settled. By way of a further example, at the beginning of a regeneration period, the particles of the adsorbent material are fully loaded with organic components and so a larger electric current is required than later in the regeneration period when a substantial amount of the adsorbed organic components will have already been oxidised.

Removal of the treated liquid from the treatment reservoir may be effected in any convenient way. For example, one or more pumps may be used to cause the treated liquid to flow out of the treatment reservoir for storage or any desirable further use. Alternatively or additionally, removal may be effected by control of valves or partitions in between the treatment reservoir and an adjacent vessel, such as a storage tank.

Further aspects of the present invention are directed specifically at continuous methods for treating aqueous organic wastes. The continuous treatment of aqueous organic wastes is more commercially applicable to, for example, the tertiary treatment of utility waters and therefore it is preferred that the pH of the treated liquid is neutral.

According to a third aspect of the present invention there is provided apparatus for the continuous treatment of an aqueous organic waste liquid to provide a treated liquid containing less organic matter, the apparatus comprising
a treatment reservoir defining first and second treatment zones separated by a porous membrane,
carbon-based adsorbent material capable of electrochemical regeneration provided in said first and second treatment zones,
a pump operable to admit aqueous organic waste liquid selectively into each of said first and second treatment zones to contact carbon-based adsorbent material in the respective treatment zone at a flow rate which is sufficiently high to pass the aqueous organic waste liquid through the carbon-based adsorbent material but below the flow rate required to fluidise the carbon-based adsorbent material,
a first electric current feeder operably connected to the carbon-based adsorbent material in the first treatment zone and a second electric current feeder operably connected to the carbon-based adsorbent material in the second treatment zone, and
a controller to operate the first and second electric current feeders to pass an electric current through the carbon-based adsorbent material in the first and second treatment zones in one direction to regenerate the carbon-based adsorbent material in one of the first and second treatment zones and to then reverse the direction of the current applied to the carbon-based adsorbent material in the first and second treatment zones to regenerate the carbon-based adsorbent material in the other of the first and second treatment zones.

The apparatus preferably comprises one or more spaced inlets through which the contaminated liquid is admitted under pressure into the bed of adsorbent material. The apparatus may comprise a plurality of said inlets spaced apart by a sufficient distance to establish a corresponding plurality of discrete liquid flow paths through the adsorbent bed. The spacing of the plurality of inlets is preferably sufficient to define a region around each liquid flow path through which adsorbent material that has adsorbed contaminant can flow so as to define a discrete, endless stream of adsorbent material within the bed of adsorbent material.

In a preferred embodiment the apparatus comprises a reservoir in fluid communication with the adsorbent bed, the reservoir being adapted to receive liquid from the bed which has been contacted by the adsorbent material.

According to a fourth aspect of the present invention there is provided a method for the continuous treatment of an aqueous organic waste liquid to provide a treated liquid containing less organic matter, the method comprising
admitting aqueous organic waste liquid into a first treatment zone of a treatment reservoir which also includes a second treatment zone, the first and second treatment zones being separated by a porous membrane, the aqueous organic waste liquid being admitted into said first treatment zone to contact carbon-based adsorbent material in a bed in the first treatment zone at a flow rate which is sufficiently high to pass the aqueous organic waste liquid through the bed carbon-based adsorbent material but below the flow rate required to fluidise the bed of carbon-based adsorbent material;
operating first and second electric current feeders operably connected to the first and second treatment zones respectively to pass an electric current in one direction through the carbon-based adsorbent material within each treatment zone to regenerate the carbon-based adsorbent material in said first treatment zone;
admitting aqueous organic waste liquid into said second treatment zone to contact carbon-based adsorbent material in a bed in the second treatment zone at a flow rate which is sufficiently high to pass the aqueous organic waste liquid through the bed of carbon-based adsorbent material but below the flow rate required to fluidise the bed of carbon-based adsorbent material; and
operating the first and second electric current feeders to reverse the direction of the current applied to the carbon-based adsorbent material in the first and second treatment zones to regenerate the carbon-based adsorbent material in the second treatment zone.

In the method according to the fourth aspect of the present invention there is provided a method for treating aqueous organic waste in a continuous manner whereby it is possible to obtain a treated liquid with a neutral pH. The above steps may be repeated any desirable number of times to effect the desired level of decontamination of the required volume of aqueous organic waste liquid. Organic components in the admitted liquid are adsorbed on to the carbon-based adsorbent material and are electrochemically oxidised by the application of the electric current. Application of the electric current is preferably effected while the aqueous organic waste liquid is passing through its respective bed of adsorbent material. As a result of the manner in which the liquid to be treated is admitted into each treatment zone the treated liquid accumulates in a region above the beds of adsorbent material in the treatment zones.

Contacting of the aqueous organic waste liquid with the carbon-based adsorbent material may be achieved through the controlled agitation of the adsorbent. Controlled agitation may be achieved by feeding one, or more preferably multiple, parallel jet streams of the aqueous organic waste under pressure to the bed of adsorbent material via inlets. Each individual stream of aqueous organic waste will generate a cylindrical or funnel shaped passage of aqueous organic waste through the adsorbent bed, drawing particulate adsorbent material from the lower region of the adsorbent bed and carrying it upward through the adsorbent bed. A downward flow of adsorbent material is produced around the upward flow of aqueous organic waste and entrained adsorbent material thereby defining a discrete, endless stream of adsorbent material within the adsorbent bed flowing along an endless path.

The control of the flow rate and path of the aqueous organic waste entering the adsorbent bed so as to pass the liquid through the bed but ensure the adsorbent material remains within the bed for regeneration enables the adsorption and regeneration processes to be carried out simultaneously within the same bed of adsorbent material. A flow rate of 1 to 500 L per hour may be employed. In one embodiment a flow rate of around 150 L per hour may be employed. The adsorbent material can adsorb organic components from the aqueous organic waste whilst, within the same adsorbent bed, an applied electric current causes gaseous products derived from the adsorbed organic component to be released from the adsorbent material thereby regenerating the adsorbent material and restoring its ability to adsorb further quantities of organic component.

During operation of the apparatus it is preferred that the electric current is applied such that the positive electric current feeder is operably connected to the bed of adsorbent material through which the aqueous organic waste is passed. In common with the first and second aspects of the present invention this results in this bed effectively behaving as an anode while the bed of adsorbent material in the other treatment zone behaves as a cathode. In this way, organic components adsorbed on to the adsorbent material in the "anode bed" are oxidised to carbon dioxide and water, while any residual water present in the "cathode bed" is reduced. As before, aqueous proton species are produced in the "anode bed" and aqueous hydroxide species are produced in the "cathode bed". It will be appreciated that the treated liquid which accumulates in the region above the beds of adsorbent material contains the aqueous proton species that are generated during the electrochemical oxidation process and any water in the "cathode bed" contains the aqueous hydroxide ions generated during the corresponding reduction process. Preferably liquid that has contacted the carbon-based adsorbent material is passed to a reservoir in fluid communication with the corresponding bed of carbon-based adsorbent material in which it can be stored, recycled back to the treatment apparatus or passed elsewhere.

After a first cycle of adsorption and electrochemical regeneration has taken place the pump is controlled to cease admitting aqueous organic waste to the first treatment zone and instead to admit aqueous organic waste to the second treatment zone containing carbon-based adsorbent material capable of adsorbing organic components from the waste liquid. The direction in which the electric current is applied via the electric current feeders is reversed so that the bed of adsorbent material that was previously behaving as the cathode now behaves as the anode and the bed of adsorbent material that was previously behaving as the anode behaves as the cathode. Any liquid containing aqueous hydroxide species is mobilised by the incoming stream of aqueous organic waste and mixes with the acidic treated liquid in the region above the beds of adsorbent material to form a neutral, treated liquid. Aqueous proton and hydroxide species are then produced in the beds of adsorbent material in the second and first treatment zones respectively such that the pH neutralising effect continues with the or each subsequent reversal in direction of the applied current and change in the treatment zone into which the liquid to be treated is admitted. In this way, a net neutral pH is achieved in the treated liquid without the need for any after-treatment steps to adjust the pH of the treated liquid, such as a chemical dosing system. The process of optimisation to ensure a treated liquid with the desired pH is obtained depends upon the cycle time employed, i.e. the length of time between each change in current direction and treatment zone to which the liquid to be treated is admitted, the concentration of organic components in the aqueous organic waste, and the volume of liquid in the liquid reservoir. In a preferred embodiment the current feeders and the pump are operated to provide a pH of approximately 7 in the treated liquid.

As mentioned above in relation to the second aspect of the present invention charged inorganic species are generated during the passage of the electric current through the carbon-based adsorbent material in the first and second treatment zones. It is preferred that the current feeders and pump are operated to minimise the electrodeposition of said charged inorganic species on the current feeders during operation of the apparatus to effect the treatment method.

Preferred features described above in relation to the first and second aspects of the present invention also represent preferred features of the third and fouth aspects of the present invention subject to a technical incompatibilty that would prevent such a combination of preferred features. Furthermore, it will be evident to the skilled person that advantages set out above in respect of the first and second aspects of the present invention are also offered by the third and fourth aspects of the present invention.

Carbon-based adsorbent materials suitable for use in the method and apparatus of the present invention are solid materials capable of convenient separation from the liquid phase and electrochemical regeneration. Preferred adsorbent materials comprise adsorbent materials capable of electrochemical regeneration, such as graphite, unexpanded graphite intercalation compounds (UGICs) and/or activated carbon, preferably in powder or flake form. Typical individual UGIC particles suitable for use in the present invention have electrical conductivities in excess of 10,000 Ω⁻¹ cm⁻¹. It will be appreciated however that in a bed of particles of the adsorbent material this will be significantly lower as there will be resistance at the particle/particle boundary. Hence it is desirable to use as large a particle as possible to keep the resistance as low as possible. In addition the larger particles will settle faster allowing a higher flow rate to be achieved. However, increasing the particle size will result in a reduction in the available surface area, so a balance is required over high settlement rates and low cell voltages against the reduction in adsorptive capacity from a reduction in surface area. It will be appreciated however that a large number of different UGIC materials have been manufactured and that different materials, having different adsorptive properties, can be selected to suit a particular application of the method of the present invention. The adsorbent material may consist only of UGICs, or a mixture of such graphite with one or more other adsorbent materials. Individual particles of the adsorbent material can themselves comprise a mixture of more than one adsorbent material. The kinetics of adsorption should be fast because the adsorbent material has no internal surface area and therefore the kinetics are not limited by diffusion of the organic component to the internal surface.

The capability of materials to undergo electrochemical regeneration will depend upon their electrical conductivity, surface chemistry, electrochemical activity, morphology, electrochemical corrosion characteristics and the complex interaction of these factors. A degree of electrical conductivity is necessary for electrochemical regeneration and a high electrical conductivity can be advantageous. Additionally, the kinetics of the electrochemical oxidation of the adsorbate must be fast. The kinetics depend upon the electrochemical activity of the adsorbent surface for the oxidation reactions that occur and also on the pH of the liquid phase. Electrochemical regeneration will generate corrosive conditions at the adsorbent surface. The electrochemical corrosion rate of the adsorbent material under regeneration conditions should be low so that the adsorption performance does not deteriorate during repeated cycles of adsorption and regeneration. Moreover, some materials can passivate upon attempted electrochemical regeneration, often due to the formation of a surface layer of non-conducting material. This may occur, for example, as a result of the polymerisation of the contaminant, for example phenol, on the surface of the adsorbent. Additionally, electrochemical destruction of the organic components on the adsorbent material will generate reaction products which must be transported away from the surface of the adsorbent material. The structure of the adsorbent material being regenerated can influence the rate of transport of the products away from the surface of the adsorbent material, and it will be appreciated that it is desirable to use adsorbent materials that facilitate this transport process. This will depend upon both the surface structure and chemistry of the adsorbent material.

It will be appreciated that preferred adsorbent materials for the present invention will desirably have an ability to adsorb organic compounds. The ability of the material to absorb is not essential, and in fact may be detrimental. The process of adsorption works by a molecular interaction between the organic component and the surface of the adsorbent. By contrast, the process of absorption involves the collection and at least temporary retention of an organic component within the pores of a material. By way of example, expanded graphite is known to be a good absorber of a range of contaminants (e.g. up to 86 grams of oil can be 'taken-up' per gram of compound). UGICs have effectively no absorption capacity. They can adsorb, but the adsorption capacity is very low as the surface area is low (e.g. up to 7 milligrams of oil can be 'taken-up' per gram of compound per adsorption cycle). These figures demonstrate a difference of four orders of magnitude between the take-up capacity of expanded graphite and that of UGICs. The selection of UGICs for use in the present invention arises from carefully balancing its high regeneratability against its relatively low take-up capacity.

The electric current feeders preferably extend across the full height and width of the adsorbent beds to maximise their proximity to adsorbent particles loaded with organic component in need of regeneration. The electric current feeders will typically be provided on opposite sides of the beds of adsorbent material provided in the first and second treatment zones. A plurality of electric current feeders may be disposed along each side. Alternatively, multiple electric current feeders may be installed horizontally to allow different electric currents to be applied at different heights across the adsorbent beds during operation. In use, a voltage can be applied between the electric current feeders, either continuously or intermittently, to pass electric current through the adsorbent material and regenerate it in the manner described in "Electrochemical regeneration of a carbon-based adsorbent loaded with crystal violet dye"; N W Brown, E P L Roberts, A A Garforth and RAW Dryfe; Electrachemica Acta 49 (2004) 3269-3281 and "Atrazine removal using adsorption and electrochemical regeneration"; N W Brown, E P L Roberts, A Chasiotis, T Cherdron and N Sanghrajka; Water Research 39 (2004) 3067-3074.

The invention will now be described by way of example and with reference to the accompanying drawings wherein:
Figure 1 a is a schematic perspective view of apparatus configured according to a preferred embodiment of the first aspect of the present invention;
Figure 1b is a schematic perspective view of apparatus configured according to a preferred embodiment of the third aspect of the present invention;
Figure 2 is a schematic perspective view of an alternative form of apparatus according to the invention;
Figure 3 illustrates the use of multiple cells in the base of apparatus according to the invention;
Figure 4 is a schematic representation of an alternative form of apparatus configured according to a preferred embodiment of the third aspect of the present invention; and
Figure 5 is a schematic representation of apparatus configured according to a similar apparatus as illustrated in Figure 4, but which is not capable of being operated such that the direction of current applied can be reversed.

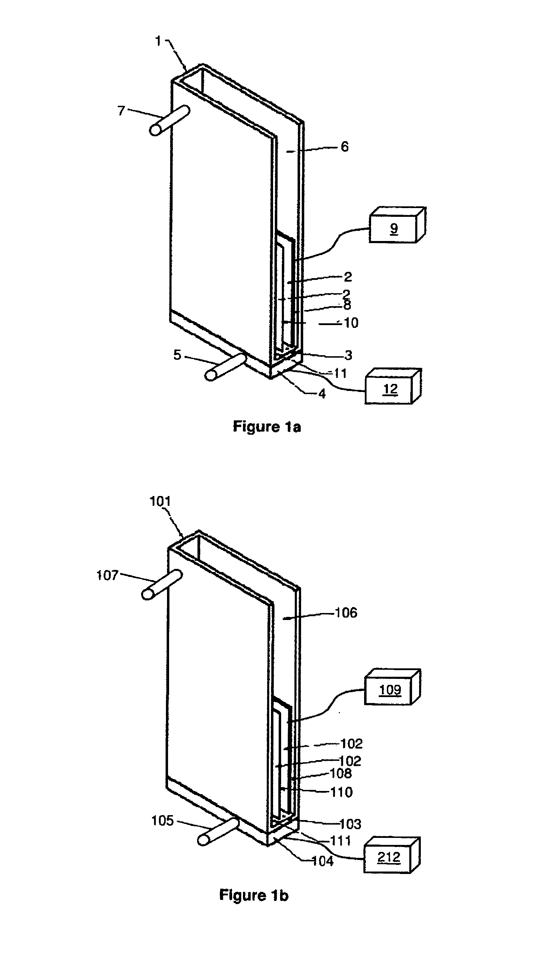

Figure 1 a illustrates apparatus that is particularly suitable for use in a batchwise process, which represents a preferred manner of operating the apparatus and methods representing the first and second aspects of the present invention. Referring to Figure 1 a there is shown an open-toped tank 1 of rectangular horizontal cross section, in the lower section of the tank 1 two parallel beds of particulate adsorbent material 2 are supported on a plate 3. Beneath the plate 3 is a chamber 4 for receiving a fluidising medium or an aqueous organic waste from an inlet feed 5. Above the beds of adsorbent material 2 is a liquid reservoir 6. At least one outlet feed or weir 7 is provided towards the top of the liquid reservoir 6. Electric current feeders 8 required for regeneration of the beds of adsorbent material 2 are positioned at either side of the tank 1, only one of the current feeders 8 being visible in Figure 1 a. A controller 9 is provided to control the direction in which the electric current is applied to the beds of adsorbent material 2 via the electric current feeders 8. Equidistant between the electric current feeders 8, and separating the two beds of adsorbent material 2, is a porous divider 10. The plate 3 defines parallel lines of equally spaced openings 11, at least one line on each side of the porous divider 7, through which a fluidising medium or an aqueous organic waste can be admitted into the beds of adsorbent material 2 from the chamber 4. Any desirable number of openings 11 may be used, of any desirable size and/or shape. A pump 12 is provided to selectively admit a fluidising medium to the beds of adsorbent material 2. In the present embodiment, the pump 12 is configured to admit fluidising medium to only one of the two beds of adsorbent material 2 at a time depending upon the direction of the applied electric current.

In use, an aqueous organic waste is admitted to the tank 1. The beds of adsorbent material 2 are then fluidised by the delivery of a suitable medium through openings 11 to distribute the adsorbent material 2 within the body of aqueous organic waste contained in the tank 1. The organic components of the aqueous organic waste are adsorbed on to the adsorbent material 2, leaving an aqueous solution. If required, additional agitation of the aqueous organic waste in an upper section of the tank 1 can be provided by a mechanical mixer (not shown). After a predetermined period of time, the flow of fluidizing medium and/or mechanical mixing is stopped with the consequence that the beds of adsorbent material 2 settle on the plate 3 between the electric current feeders 8 and either side of the porous divider 10. The beds of adsorbent material 2 supported on the plate 3 can now be electrochemically regenerated. Electrochemical regeneration is accomplished by passing an electric current through the beds of adsorbent material 2 between the electric current feeders 8. The bed of adsorbent material 2 next to the positive current feeder behaves as an anode and adsorbed organics in this bed are oxidised and then released in the form of carbonaceous gases and water. The bed of adsorbent material 2 next to the negative current feeder behaves as a cathode and water present in that bed is reduced. The produced gases are released either through the open top of the tank 1, or if the tank 1 is closed, through a separate exhaust duct (not shown), possibly for subsequent treatment. After a period of regeneration, the direction of the applied electric current is reversed so that the bed of adsorbent material 2 that was previously behaving as the cathode behaves as the anode and the bed of adsorbent material 2 that was previously behaving as the anode behaves as the cathode, initiating electrochemical regeneration of the bed of adsorbent material 2 next to the current feeder 8 that is now the anode, which helps to maintain an acidic pH in the tank 1. If necessary, liquid retained in the tank 1 after regeneration of the beds of adsorbent material 2 can now undergo further removal of organic matter by re-fluidization of the beds of adsorbent material 2 to re-distribute the particulate adsorbent material 2 once more within the aqueous organic waste liquid requiring treatment, followed by further electrochemical regeneration of the adsorbent material 2. This sequence can be repeated any desirable number of times on the same batch of aqueous organic waste liquid if, for example, it is particularly heavily contaminated; on different batches of aqueous organic waste liquid if, for example, a single treatment cycle including a single electric current reversal is sufficient; on mixed batches of aqueous organic waste liquid; or a batch of aqueous organic waste liquid to which further organic components are added during treatment. If required, the level of decontamination can be monitored constantly or periodically using conventional means throughout operation of the apparatus of Figure 1 a.

Figure 1b illustrates apparatus that is particularly suitable for use in a continuous process, which represents a preferred manner of operating the apparatus and methods representing the third and fourth aspects of the present invention. In Figure 1b the components corresponding to those described above in relation to Figure 1 a take the same reference number but increased by 100. For example, in the apparatus shown in Figure 1b the open-toped tank takes reference number 101. Those components which differ in function to a similar component in Figure 1 a take the same reference number but increased by 200. Thus, for example, the pump which operates differently in the Figure 1b embodiment as compared to the Figure 1 a embodiment takes reference number 212.

When it is desired to carry out a continuous treatment process using the apparatus of Figure 1b an aqueous organic waste liquid is admitted to the chamber 104 via an inlet pipe 105. The aqueous organic waste is under sufficient pressure that it enters one of the beds of adsorbent material 102 through openings 111. Pump 212 is configured to control the flow of the aqueous organic waste so that it is only admitted via the openings 111 into one of the beds of adsorbent material 102 at a time. The pump 212 is operated so as to provide a tunnel-like, uplift of aqueous organic waste through the bed of adsorbent material 102, entraining particles of the adsorbent material 102 and initiating a downward flow of adsorbent material 102 on either side of the upward tunnels of aqueous organic waste, creating discrete endless paths of adsorbent material 102 in the bed of adsorbent material 102. While the adsorbent material 102 is passing along the endless paths within the bed of adsorbent material 102, electric current feeders 108 are operated to pass an electric current through the two beds of adsorbent material 102 thereby effectively achieving simultaneous adsorption of organic contaminants and electrochemical regeneration within the same bed of adsorbent material 102. The controller 109 is operated so that the positive electric current feeder 108 is next to the bed of adsorbent material 102 through which the aqueous organic waste is admitted. As described above in relation to Figure 1a, the bed of adsorbent material 102 next to the positive electric current feeder acts as an anode and effects electrochemical regeneration of the adsorbent material 102 in that bed and releasing the adsorbed organic contaminants in the form of carbonaceous gases and water. In view of the manner in which fluidisation of the adsorbent material 102 is carried out in this version of the apparatus, electrochemical regeneration of the adsorbent material 102 is particularly efficient in the regions of the bed of adsorbent material 102 having a higher density of adsorbent material 102. At this stage of the treatment process, the parallel bed of adsorbent material 102 into which no liquid requiring treatment has been admitted acts as a cathode and any water present in this treatment zone is reduced. As explained above, aqueous proton species are produced in the bed of adsorbent material 102 acting as the anode and aqueous hydroxide species are produced in the bed of adsorbent material 102 acting as the cathode.

As a result of operating the pump 212 to admit the aqueous organic waste liquid into the bed of adsorbent material 102 at a flow rate which is sufficiently high to pass the aqueous organic waste liquid through the adsorbent material 102 but below the flow rate required to fluidise the adsorbent material102, when the aqueous organic waste and adsorbent material 102 reach the top of the bed of adsorbent material 102, the treated liquid, containing the produced aqueous proton species, accumulates in a liquid reservoir 106 above the beds of adsorbent material 102.

After a suitable period of simultaneous adsorption and electrochemical regeneration, the bed of adsorbent material 102 into which the aqueous organic waste is admitted is changed and the direction of the electric current is reversed by operation of controller 109 so that the bed of adsorbent material 102 that was previously behaving as a cathode behaves as an anode and the bed of adsorbent material 102 that was previously behaving as an anode behaves as a cathode. Any liquid containing aqueous hydroxide species in the bed of adsorbent material 102 that was initially behaving as a cathode is mobilised upwardly by the incoming stream of aqueous organic waste and mixes with the treated liquid containing aqueous proton species already present in the liquid reservoir 106 to form a pH neutral, treated liquid. During subsequent treatment cycles aqueous proton and hydroxide species are produced in the beds of adsorbent material 102 and the pH-neutralising effect in the treated liquid in the reservoir 106 continues. The pH of the treated liquid in the liquid reservoir 106 is at least partially determined by the time period over which each half of a treatment cycle is effected, i.e. by the length of time between reversal of the applied electric current and alternation of the bed of adsorbent material 102 into which the aqueous organic waste is admitted. The pH of the treated liquid in the reservoir 106 may therefore be monitored continually or periodically to establish whether it lies within a desired range, e.g. around pH 7. If it is determined that the pH of the treated liquid is too high or too low then an appropriate signal can be sent to the controller 109 and the pump 212 to adjust the timing between each half of the treatment cycle and therefore correct the pH of the treated liquid so that it falls into the desired range.

The treated liquid in the liquid reservoir 106, which is free or substantially free of used adsorbent material 102, and can be released as desired via the outlet feed 107. Alternatively, the liquid can be fed from the outlet feed 107 back into the inlet feed 105 for further decontamination if required. The movement of the treated liquid from the liquid reservoir 106 to an optional additional liquid reservoir (not shown) may, for example, be effected by controlling the depth of liquid within the liquid reservoir 106 so that its surface is periodically higher than an upper edge of a dividing wall between the liquid reservoir 106 and the additional liquid reservoir. In this way, treated liquid periodically flows over the upper edge of the dividing wall into the additional liquid reservoir.

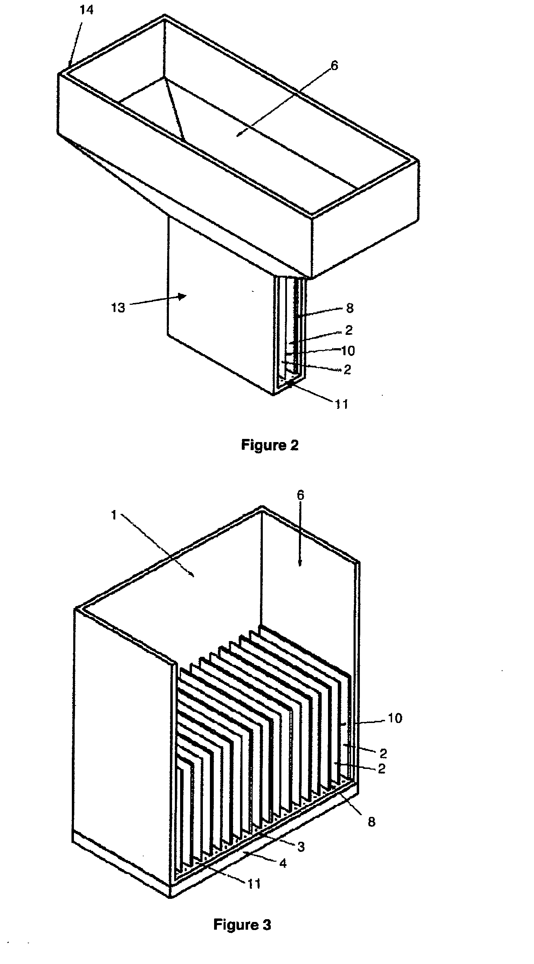

Figure 2 shows an alternative preferred embodiment of the apparatus according to the first aspect of the present invention shown in Figure 1 a. Similar components take the same reference numbers as in Figure 1 a. The apparatus is effectively the same as the apparatus of Figure 1 a except that the cross-sectional area of a lower section 13 of the tank 1 is smaller than that of an upper section 14 of the tank 1. In use, the beds of adsorbent material 2 are fluidised in the same way as described above in relation to Figure 1 a by delivery of a simple fluidising medium (e.g. air) through the openings 11. When delivery of the fluidizing medium is halted the adsorbent material 2 is directed back to the lower section of the tank 1 by the converging tank walls in between the larger upper section and the smaller lower section of the tank 1.

Figure 3 illustrates another preferred embodiment of apparatus according to the first aspect of the present invention in which a multiplicity of electric current feeders 8 can be closely aligned in a tank 1 in a parallel arrangement. Application of a voltage across the outer current feeders 8 polarises the intermediate electric current feeders 8, so effectively a series of alternate positive and negative current feeders are established between the outermost positive current feeder 8 and negative current feeder 8. The use of bipolar current feeders 8 in this way facilitates one current to be generated a number of times with a proportional increase in voltage. This has the advantage of increasing the voltage to obtain a larger current in the adsorbent material 2 in sections of the bed of adsorbent material 2 between the electric current feeders 8 than would be achieved by the simple application of a larger voltage across the combined width of all of the beds of adsorbent material 2. By way of example, the distance between the electric current feeders 8 can be up to about 25 mm, which is sufficient to allow the cell voltage to be kept at an acceptable level without creating blockages of the adsorbent material 2 and to allow the oxidised organic components removed from the aqueous organic waste to escape in the form of bubbles.

It will be appreciated that the alternative embodiments of the apparatus shown in Figures 2 and 3 may be employed in methods according to the second aspect of the present invention or methods according to the fourth aspect of the present invention with suitable modification taking into account the description of the Figure 1b apparatus above.

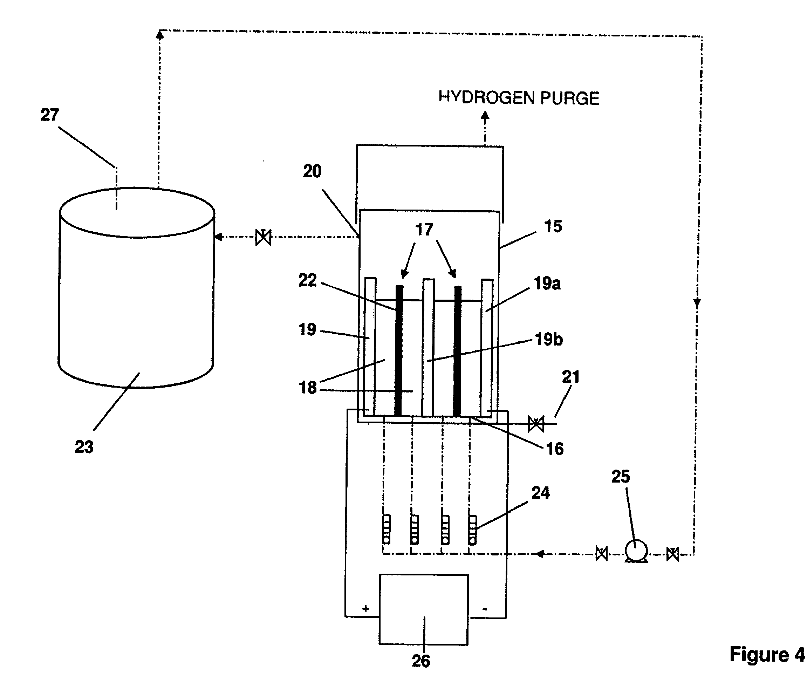

Figure 4 illustrates apparatus that is particularly suitable for use in a continuous process, which represents a preferred manner of operating the apparatus and methods representing the third and fourth aspects of the present invention. Referring to Figure 4 there is shown a tank 15 of rectangular horizontal cross section with inlets 16 at the base of the tank 15 for supplying aqueous organic waste thereto. The tank 15 has two cells 17, each containing beds of adsorbent material 18 for treatment of waste water and each having electrodes 19 for regenerating the adsorbent material 18. Towards the top of the tank 15 there is a liquid outlet 20 for eluting treated organic waste and a hydrogen purge outlet for eluting hydrogen. A drain 21 is provided towards the bottom of the tank 15 for purging liquid from the system.

Each cell 17 has one dedicated electrode 19a and a further electrode 19b is shared between the two cells 17. Each cell 17 has two parallel beds of particulate adsorbent material 18 located between the electrodes 19, the parallel beds 18 being separated from one another by a membrane 22 located equidistant between the electrodes 19 in each cell 17. The waste to be treated is held in a balance tank 23 and is pumped into the tank 15 *via* flow meters 24 for controlling the rate of flow by means of feeding pump 25. The inlets 16 and the outlet 20 are connected in a circuit to enable continuous circulation of the waste liquid through the tank 15. A power supply 26 supplies electric current to the electrodes 19 in each cell 17 and is operable to control the direction in which the electric current is applied. The balance tank 23 has an outlet sampling port 27 for monitoring the progress of treatment of the organic waste.

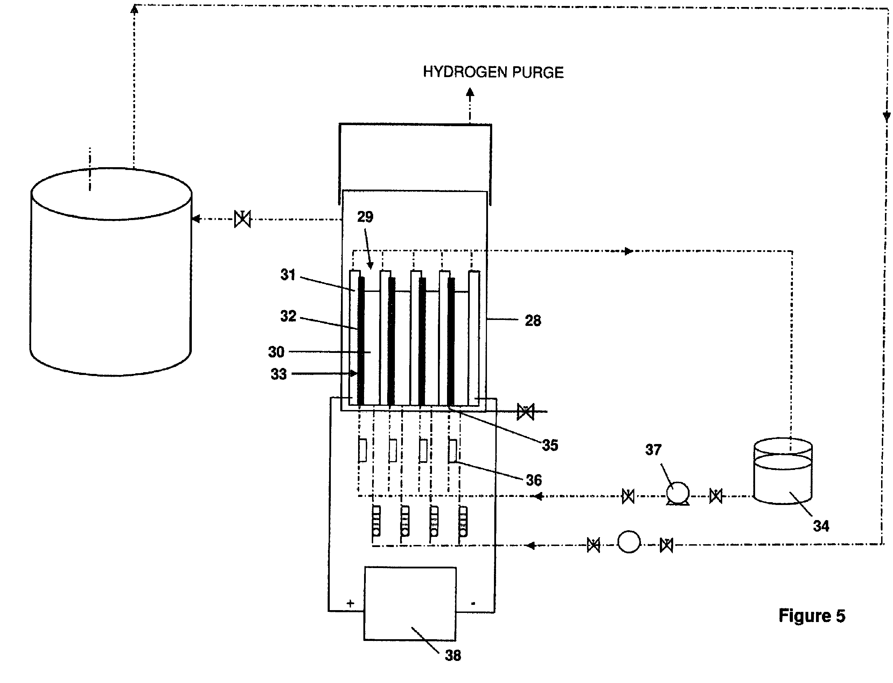

Figure 5 illustrates apparatus that is configured according to a similar apparatus and method as illustrated in Figure 4, but which is not capable of being operated such that the direction of current applied can be reversed. The features of the apparatus of Figure 5 which are shared with the apparatus of Figure 4 will not be described in any detail. The tank 28 of Figure 5 (corresponding to the tank 15 of Figure 4) has four adjacent cells 29, each provided with a bed of adsorbent material 30 for treatment of waste water and each having electrodes 31 for regenerating the adsorbent material 30.

Each cell 29 has one electrode 31, a porous membrane 32 located adjacent the electrode 31 and a bed of particulate adsorbent material 30 located adjacent the porous membrane 32 on the side of the membrane 32 which is distal from the electrode 31. Together, the porous membrane 32 of one cell and the electrode 31 of an adjacent cell define a cavity for the particulate adsorbent material 30. The region between the membrane 32 and the electrode 31 of one cell 29 defines a catholyte compartment 33 for holding catholyte. A supply of catholyte is held in a catholyte tank 34 and is pumped into each catholyte compartment 33 through a dedicated catholyte inlet 35 in the floor of the tank 28 *via* flow meters 36 for controlling the rate of flow by means of the catholyte pump 37. A power supply 38 supplies electric current to the electrodes 31 in each cell 29.

### EXAMPLE 1

An experiment was conducted to demonstrate the performance of the apparatus and method of the first and second aspects of the present invention. The oil used for the experiment was Shell's Tellus 46 Hydraulic Oil Lubricant. An oil/water emulsion was created by mixing 40 grams of oil with 4 litres of water in the presence of a minimal volume of an organic polymer and 26 grams of sodium chloride. The purpose of the organic polymer was merely to stabilise the emulsion. Any suitable organic polymer may be used as could be determined by the skilled person using their common general knowledge. Although the apparatus can be operated without an electrolyte the sodium chloride was added to provide the emulsion with conductivity and thereby achieve a low cell voltage. A portion of this emulsion was admitted into a treatment tank containing 2.2 kilograms of unexpanded intercalated graphite particles as the adsorbent. A number of adsorption/regeneration treatment cycles were carried out. At various stages throughout the treatment, additional aliquots of the emulsion were admitted to the treatment tank.

The period of each adsorption phase was 20 minutes. During the regeneration phase an electric current was passed between the electric current feeders in one direction to initiate electrochemical oxidation of the adsorbed organic components and simultaneous regeneration of the adsorbent particles. After 120 minutes the direction of the electric current was reversed and the electric current feeders operated for another 120 minutes. An electric current density of 8 mAcm⁻² was used in each direction, making a total of 72, 000 coulombs passed in one complete regeneration cycle.

After one adsorption phase, a sample of the adsorbent was removed from the system and the mass of oil on the adsorbent was quantified. After 240 minutes of electrochemical regeneration, another sample of the adsorbent was removed for quantification of the mass of oil on the adsorbent. The quantity of oil on the adsorbent over a number of treatment cycles is set out below in Table 1.

The pH of the emulsion was measured at regular intervals throughout the treatment. The initial pH of the emulsion was 3.78. The successful maintenance of an acidic pH over a number of treatment cycles can be determined from the results presented in Table 2 below.

### EXAMPLE 2

Two experiments were conducted to demonstrate the improved performance of the apparatus and method of the third and fourth aspects of the present invention (the apparatus of which is illustrated in Figure 4) compared to an apparatus and method not capable of being operated such that the direction of current applied can be reversed (hereinafter described as the "Catholyte System", the apparatus of which is illustrated in Figure 5). The organic component used for the experiments was KENANTHROL VIOLET 2B manufactured by KEMTEX Colours. 20 grams of the organic component was dissolved in 200 litres of water to produce an aqueous solution containing 100 parts per million of the organic component.

In both experiments the aqueous solution was circulated through a treatment tank, collected, and then recirculated through the same treatment tank to achieve further removal of the dissolved organic component. The solution was circulated at a flow rate of 150 litres per hour. The treatment tank contained 20 kilograms of unexpanded intercalated graphite particles as the adsorbent. An electric current was passed between electric current feeders in the treatment tank during circulation of the solution so as to initiate electrochemical oxidation of the adsorbed organic component and simultaneous regeneration of the adsorbent particles.
For the experiment demonstrating the third and fourth aspects of the present invention, the direction of the electric current was reversed every 5 minutes. The treatment tank contained four separate beds of unexpanded intercalated graphite particles (see Figure 4). During the application of an electric current, in absence of a separate catholyte compartment, two of the beds acted as anodes, and two of the beds acted as cathodes. When the direction of the electric current was reversed, the beds that initially acted as anodes acted as cathodes and vice versa. An electric current of 10 amps was used in each direction, making a total of 72,000 coulombs passed during one hour of treatment.

For the comparative experiment using the continuous Catholyte System, 0.3 percent sodium chloride and 1 percent hydrochloric acid ware added to the separate catholyte compartment. The purpose of the sodium chloride and hydrochloric acid was to provide the conductivity required for low voltage operation. The treatment tank contained four separate beds of unexpanded intercalated graphite particles (see figure 5). During the application of an electric current in one direction only, the separate catholyte compartment acted as the cathode and each of the four beds acted as individual anodes. Consequently, double the charge was passed through the treatment tank compared to the charge passed during operation of the present invention. So as to conduct a comparative experiment, an electric current of 5 amps was used, making a total of 72,000 coulombs passed during one hour of treatment.

Samples of the treated liquid were taken after each individual pass through the treatment tank. The total organic content (TOC) of each sample was measured and the amount of organic removed from the system after each pass was quantified. The quantity of organic removed from the solution over a number of passes through the treatment tank, for both the system of the third and fourth aspects of the present invention ("System of Aspects 3 and 4") and for the Catholyte System, is set out below in Table 3. It can be seen that the system of the third and fourth aspects of the present invention provides comparable organic removal to the Catholyte System, whilst also providing the numerous advantages described above.

The average voltage for operation of the Catholyte System was 16.2 volts. The average voltage for operation of the system of the third and fourth aspects of the present invention was 29.2 volts. The higher average voltage of the system of the third and fourth aspects of the present invention is predominantly due to operation at double the current, as described above. The average voltage for operation of the system of the third and fourth aspects of the present invention when run at 5 amps would be 14.0 volts.

**Table 1**

| **Adsorption** / **regeneration cycle** | **Mass of oil on adsorbent particle after adsorption / g** | **Mass of oil on adsorbent particle after regeneration** / **g** |
|---|---|---|
| 0 | 40.0 | n/a |
| 1 | 34.7 | 20.4 |
| 2 | n/a | 34.7 |
| 3 | 17.9 | n/a |
| 4 | 13.3 | 11.5 |
| 5 | 14.4 | 12.4 |
| 6 | 9.1 | 8.1 |
| 7 | 7.6 | 6.5 |
| 8 | 7.0 | 6.2 |
| 9 (re-spike) | 45.3 | 37.0 |
| 10 | 32.6 | 22.5 |
| 11 | 21.1 | 19.0 |
| 12 | 14.3 | 13.0 |
| 13 | 12.2 | 11.4 |
| 14 | 11.2 | 11.6 |
| 15 | 9.8 | 9.2 |
| 16 | 8.1 | 7.8 |
| 17 | 10.1 | 9.3 |
| 18 | 9.3 | 9.0 |
| 19 | 8.5 | 8.4 |
| 20 | 7.8 | 7.9 |
| 21 | 7.1 | 7.5 |
| 22 | 7.0 | 6.9 |
| 23 | 6.9 | 6.0 |
| 24 | 5.7 | 5.6 |
| 25 | 5.4 | 5.4 |
| 26 | 5.1 | 6.0 |
| 27 (re-spike) | 42.6 | 36.7 |
| 28 | 29.2 | 28.7 |
| 29 | 25.3 | 24.3 |
| 30 | 19.0 | n/a |

**Table 2**

| | | **pH of solution during 10 consecutive regeneration cycles** | | | | | | | | | |
|---|---|---|---|---|---|---|---|---|---|---|---|
| **Electric current feeder acting as anode** | **Regeneration time / minutes** | **1** | **2** | **3** | **4** | **5** | **6** | **7** | **8** | **9** | **10** |
| n/a | 0 | 1.86 | 2.48 | 1.93 | 2.07 | 2.06 | 1.81 | 1.73 | 1.88 | 1.88 | 1.84 |
| 1 | 60 | 1.90 | 2.17 | 1.99 | 2.07 | 1.81 | 1.90 | 1.79 | 2.03 | 2.01 | 2.22 |
| 1 | 120 | 2.04 | n/a | 2.14 | 2.06 | 2.13 | 2.16 | 2.02 | 2.63 | 2.09 | 3.65 |
| 2 | 180 | 2.09 | 2.12 | 2.16 | 2.13 | 2.11 | 2.06 | 2.09 | 2.66 | 2.11 | 2.64 |
| 2 | 240 | 2.08 | 2.16 | 2.22 | 2.01 | 2.05 | 2.25 | 3.20 | 2.50 | 2.22 | 3.37 |

**Table 3**

| **Charged passed / Coulombs** | **Cumulative percentage of bulk TOC removed / %** | |
|---|---|---|
| | **System of Aspects 3 and 4** | **Catholyte System** |
| 0 | 0.0 | 0.0 |
| 36,000 | 9.8 | 22.1 |
| 72,000 | 18.7 | 30.9 |
| 108,000 | 25.4 | 34.2 |
| 144,000 | 51.1 | 41.8 |
| 180,000 | 54.6 | 40.1 |
| 216,000 | 56.1 | 43.0 |
| 252,000 | 56.3 | 46.6 |

## Claims

1. Apparatus for the treatment of an aqueous organic waste liquid to provide a treated liquid containing less organic matter, the apparatus comprising
a treatment reservoir defining first and second treatment zones separated by a porous membrane,
carbon-based adsorbent material capable of electrochemical regeneration provided in said first and second treatment zones,
an agitator operable to distribute the carbon-based adsorbent material in aqueous organic waste liquid contained in each of the first and second treatment zones,
a first electric current feeder operably connected to the carbon-based adsorbent material in the first treatment zone and a second electric current feeder operably connected to the carbon-based adsorbent material in the second treatment zone, and
a controller to operate the first and second electric current feeders to pass an electric current through the carbon-based adsorbent material in the first and second treatment zones in one direction to regenerate the carbon-based adsorbent material in one of the first and second treatment zones and to then reverse the direction of the current applied to the carbon-based adsorbent material in the first and second treatment zones to regenerate the carbon-based adsorbent material in the other of the first and second treatment zones.

2. Apparatus according to claim 1, wherein the agitator comprises a chamber under the treatment reservoir defining one or more inlets and a pump to deliver fluid under pressure through said inlet(s).

3. A method for the treatment of an aqueous organic waste liquid to provide a treated liquid containing less organic matter, the method comprising
admitting the aqueous organic waste liquid into first and second treatment zones of a treatment reservoir, the first and second treatment zones being separated by a porous membrane, each treatment zone containing carbon-based adsorbent material capable of electrochemical regeneration;
distributing the carbon-based adsorbent material in the aqueous organic waste liquid within each treatment zone;
allowing the carbon-based adsorbent material to settle within each treatment zone;
operating first and second electric current feeders operably connected to the first and second treatment zones respectively to pass an electric current in one direction through the carbon-based adsorbent material within each treatment zone to regenerate the carbon-based adsorbent material in one of the first and second treatment zones; and
operating the first and second electric current feeders to reverse the direction of the current applied to the carbon-based adsorbent material in the first and second treatment zones to regenerate the carbon-based adsorbent material in the other of the first and second treatment zones.

4. A method according to claim 3, wherein the steps of distributing the carbon-based adsorbent material in the aqueous organic waste liquid and allowing the carbon-based adsorbent material to settle are repeated one or more times to remove organic matter from the aqueous organic waste liquid prior to operating the first and second electric current feeders to reverse the direction of the current applied to the carbon-based adsorbent material.

5. A method according to claim 3 or 4, wherein the steps of distributing the carbon-based adsorbent material in the aqueous organic waste liquid and allowing the carbon-based adsorbent material to settle are repeated one or more times to remove organic matter from the aqueous organic waste liquid prior to removing the treated liquid from the treatment reservoir.

6. A method according to any one of claims 3 to 5, wherein charged inorganic species are generated during the passage of the electric current through the carbon-based adsorbent material in the first and second treatment zones and the current feeders are operated to minimise the electrodeposition of said charged inorganic species on the current feeders during operation.

7. A method according to any one of claims 3 to 6, wherein the aqueous organic waste liquid contains radioactive species.

8. Apparatus for the continuous treatment of an aqueous organic waste liquid to provide a treated liquid containing less organic matter, the apparatus comprising
a treatment reservoir defining first and second treatment zones separated by a porous membrane,
carbon-based adsorbent material capable of electrochemical regeneration provided in said first and second treatment zones,
a pump operable to admit aqueous organic waste liquid selectively into each of said first and second treatment zones to contact carbon-based adsorbent material in the respective treatment zone at a flow rate which is sufficiently high to pass the aqueous organic waste liquid through the carbon-based adsorbent material but below the flow rate required to fluidise the carbon-based adsorbent material,
a first electric current feeder operably connected to the carbon-based adsorbent material in the first treatment zone and a second electric current feeder operably connected to the carbon-based adsorbent material in the second treatment zone, and
a controller to operate the first and second electric current feeders to pass an electric current through the carbon-based adsorbent material in the first and second treatment zones in one direction to regenerate the carbon-based adsorbent material in one of the first and second treatment zones and to then reverse the direction of the current applied to the carbon-based adsorbent material in the first and second treatment zones to regenerate the carbon-based adsorbent material in the other of the first and second treatment zones.

9. Apparatus according to claim 8, wherein the apparatus comprises one or more spaced inlets through which the contaminated liquid is admitted under pressure into the bed of adsorbent material.

10. Apparatus according to claim 9, wherein the apparatus comprises a plurality of said inlets spaced apart by a sufficient distance to establish a corresponding plurality of discrete liquid flow paths through the adsorbent bed.

11. A method for the continuous treatment of an aqueous organic waste liquid to provide a treated liquid containing less organic matter, the method comprising
operating a pump to admit aqueous organic waste liquid into a first treatment zone of a treatment reservoir which also includes a second treatment zone, the first and second treatment zones being separated by a porous membrane, the aqueous organic waste liquid being admitted into said first treatment zone to contact carbon-based adsorbent material in a bed in the first treatment zone at a flow rate which is sufficiently high to pass the aqueous organic waste liquid through the bed carbon-based adsorbent material but below the flow rate required to fluidise the bed of carbon-based adsorbent material;
operating first and second electric current feeders operably connected to the first and second treatment zones respectively to pass an electric current in one direction through the carbon-based adsorbent material within each treatment zone to regenerate the carbon-based adsorbent material in said first treatment zone;
operating the pump to admit aqueous organic waste liquid into said second treatment zone to contact carbon-based adsorbent material in a bed in the second treatment zone at a flow rate which is sufficiently high to pass the aqueous organic waste liquid through the bed of carbon-based adsorbent material but below the flow rate required to fluidise the bed of carbon-based adsorbent material; and
operating the first and second electric current feeders to reverse the direction of the current applied to the carbon-based adsorbent material in the first and second treatment zones to regenerate the carbon-based adsorbent material in the second treatment zone.

12. A method according to claim 11, wherein the aqueous organic waste liquid is admitted under pressure through one or more inlets into each bed of carbon-based adsorbent material.

13. A method according to claim 12, wherein the aqueous organic waste liquid is admitted through a plurality of said inlets spaced apart by a sufficient distance to establish a corresponding plurality of discrete liquid flow paths through the bed of carbon-based adsorbent material in each treatment zone.

14. A method according to any one of claims 11 to 13, wherein liquid that has contacted the carbon-based adsorbent material is passed to a reservoir in fluid communication with the corresponding bed of carbon-based adsorbent material.

15. A method according to any one of claims 11 to 14, wherein charged inorganic species are generated during the passage of the electric current through the carbon-based adsorbent material in the first and second treatment zones and the current feeders and pump are operated to minimise the electrodeposition of said charged inorganic species on the current feeders during operation.

## Patentansprüche

1. Vorrichtung zur Behandlung einer wässrigen organischen Abfallflüssigkeit, um eine behandelte Flüssigkeit bereitzustellen, die weniger organische Stoffe enthält, wobei die Vorrichtung Folgendes umfasst:
einen Behandlungsbehälter, der eine erste und eine zweite Behandlungszone definiert, die durch eine poröse Membran getrennt sind,
kohlenstoffbasiertes Adsorptionsmaterial, das zu elektrochemischer Regeneration fähig ist, das in der ersten und zweiten Behandlungszone bereitgestellt ist,
ein Rührwerk, das betrieben werden kann, um das kohlenstoffbasierte Adsorptionsmaterial in wässriger organischer Abfallflüssigkeit, die in jeder der ersten und zweiten Behandlungszone enthalten ist, zu verteilen,
eine erste Zuleitung für elektrischen Strom, die betätigbar mit dem kohlenstoffbasierten Adsorptionsmaterial in der ersten Behandlungszone verbunden ist, und eine zweite Zuleitung für elektrischen Strom, die betätigbar mit dem kohlenstoffbasierten Adsorptionsmaterial in der zweiten Behandlungszone verbunden ist, und
eine Steuereinrichtung, um die erste und zweite Zuleitung für elektrischen Strom zu betreiben, um einen elektrischen Strom durch das kohlenstoffbasierte Adsorptionsmaterial in der ersten und zweiten Behandlungszone in einer Richtung zu leiten, um das kohlenstoffbasierte Adsorptionsmaterial in einer der ersten und zweiten Behandlungszone zu regenerieren und um dann die Richtung des auf das koholenstoffbasierte Adsorptionsmaterial in der ersten und zweiten Behandlungszone angewendeten elektrischen Stroms umzukehren, um das kohlenstoffbasierte Adsorptionsmaterial in der anderen der ersten und zweiten Behandlungszone zu regenerieren.

2. Vorrichtung nach Anspruch 1, wobei das Rührwerk eine Kammer unter dem Behandlungsbehälter umfasst, die einen oder mehrere Einlässe und eine Pumpe definiert, um unter Druck stehendes Fluid durch den/die Einlass/Einlässe zu leiten.

3. Verfahren zur Behandlung einer wässrigen organischen Abfallflüssigkeit, um eine behandelte Flüssigkeit bereitzustellen, die weniger organische Stoffe enthält, wobei das Verfahren Folgendes umfasst:
Einlassen der wässrigen organischen Abfallflüssigkeit in eine erste und zweite Behandlungszone eines Behandlungsbehälters, wobei die erste und zweite Behandlungszone durch eine poröse Membran getrennt sind, wobei jede Behandlungszone kohlenstoffbasiertes Adsorptionsmaterial, das zu elektrochemischer Regeneration fähig ist, enthält;
Verteilen des kohlenstoffbasierten Adsorptionsmaterials in der wässrigen organischen Abfallflüssigkeit innerhalb jeder Behandlungszone;
Gestatten des kohlenstoffbasierten Adsorptionsmaterials, sich innerhalb jeder Behandlungszone abzusetzen;
Betreiben einer ersten und zweiten Zuleitung für elektrischen Strom, die betätigbar mit der ersten bzw. der zweiten Behandlungszone verbunden sind, um elektrischen Strom in einer Richtung durch das kohlenstoffbasierte Adsorptionsmaterial innerhalb jeder Behandlungszone zu leiten, um das kohlenstoffbasierte Adsorptionsmaterial in einer der ersten und zweiten Behandlungszone zu regenerieren; und
Betreiben der ersten und zweiten Zuleitung für elektrischen Strom, um die Richtung des auf das kohlenstoffbasierte Adsorptionsmaterial in der ersten und zweiten Behandlungszone angewendeten elektrischen Stroms umzukehren, um das kohlenstoffbasierte Adsorptionsmaterial in der anderen der ersten und zweiten Behandlungszone zu regenerieren.

4. Verfahren nach Anspruch 3, wobei die Schritte des Verteilens des kohlenstoffbasierten Adsorptionsmaterials in der wässrigen organischen Abfallflüssigkeit und das Gestatten des kohlenstoffbasierten Adsorptionsmaterials, sich abzusetzen, ein oder mehrere Male wiederholt werden, um vor dem Betreiben der ersten und zweiten Zuleitung für elektrischen Strom, um die Richtung des auf das kohlenstoffbasierte Adsorptiosmaterial angewendeten elektrischen Stroms umzukehren, organische Stoffe aus der wässrigen organischen Abfallflüssigkeit zu entfernen.

5. Verfahren nach Anspruch 3 oder 4, wobei die Schritte des Verteilens des kohlenstoffbasierten Adsorptionsmaterials in der wässrigen organischen Abfallflüssigkeit und das Gestatten des kohlenstoffbasierten Adsorptionsmaterials, sich abzusetzen, ein oder mehrere Male wiederholt werden, um vor dem Entfernen der behandelten Flüssigkeit aus dem Behandlungsbehälter organische Stoffe aus der wässrigen organischen Abfallflüssigkeit zu entfernen.

6. Verfahren nach einem der Ansprüche 3 bis 5, wobei geladene anorganische Spezies während der Leitung des elektrischen Stroms durch das kohlenstoffbasierte Adsorptionsmaterial in der ersten und zweiten Behandlungszone erzeugt werden und die Stromzuleitungen betrieben werden, um die Elektrodeposition der geladenen anorganischen Spezies auf den Stromzuleitungen während des Betriebs zu minimieren.

7. Verfahren nach einem der Ansprüche 3 bis 6, wobei die wässrige organische Abfallflüssigkeit radioaktive Spezies enthält.

8. Vorrichtung zur kontinuierlichen Behandlung einer wässrigen organischen Abfallflüssigkeit, um eine behandelte Flüssigkeit bereitzustellen, die weniger organische Stoffe enthält, wobei die Vorrichtung Folgendes umfasst:
einen Behandlungsbehälter, der eine erste und eine zweite Behandlungszone definiert, die durch eine poröse Membran getrennt sind,
kohlenstoffbasiertes Adsorptionsmaterial, das zu elektrochemischer Regeneration fähig ist, das in der ersten und zweiten Behandlungszone bereitgestellt ist,
eine Pumpe, die betrieben werden kann, um wässrige organische Abfallflüssigkeit selektiv in jede der ersten und zweiten Behandlungszone einzulassen, um kohlenstoffbasiertes Adsorptionsmaterial in der entsprechenden Behandlungszone mit einer Strömungsrate zu berühren, die ausreichend hoch ist, um die wässrige organische Abfallflüssigkeit durch das kohlenstoffbasierte Adsorptionsmaterial zu leiten, jedoch geringer als die Strömungsrate ist, die erforderlich ist, um das kohlenstoffbasierte Adsorptionsmaterial zu fluidisieren,
eine erste Zuleitung für elektrischen Strom, die betätigbar mit dem kohlenstoffbasierten Adsorptionsmaterial in der ersten Behandlungszone verbunden ist, und eine zweite Zuleitung für elektrischen Strom, die betätigbar mit dem kohlenstoffbasierten Adsorptionsmaterial in der zweiten Behandlungszone verbunden ist, und
eine Steuereinrichtung, um die erste und zweite Zuleitung für elektrischen Strom zu betreiben, um einen elektrischen Strom durch das kohlenstoffbasierte Adsorptionsmaterial in der ersten und zweiten Behandlungszone in einer Richtung zu leiten, um das kohlenstoffbasierte Adsorptionsmaterial in einer der ersten und zweiten Behandlungszone zu regenerieren und um dann die Richtung des auf das koholenstoffbasierte Adsorptionsmaterial in der ersten und zweiten Behandlungszone angewendeten elektrischen Stroms umzukehren, um das kohlenstoffbasierte Adsorptionsmaterial in der anderen der ersten und zweiten Behandlungszone zu regenerieren.

9. Vorrichtung nach Anspruch 8, wobei die Vorrichtung einen oder mehrere beabstandete Einlässe umfasst, durch welche die kontaminierte Flüssigkeit unter Druck in das Bett aus Adsorptionsmaterial eingelassen wird.

10. Vorrichtung nach Anspruch 9, wobei die Vorrichtung eine Vielzahl der Einlässe umfasst, die durch einen ausreichenden Abstand voneinander beabstandet sind, um eine entsprechende Vielzahl von diskreten Flüssigkeitsströmungswegen durch das Adsorptionsbett zu bilden.

11. Verfahren zur kontinuierlichen Behandlung einer wässrigen organischen Abfallflüssigkeit, um eine behandelte Flüssigkeit bereitzustellen, die weniger organische Stoffe enthält, wobei das Verfahren Folgendes umfasst:
Betreiben einer Pumpe, um wässrige organische Abfallflüssigkeit in eine erste Behandlungszone eines Behandlungsbehälters einzulassen, der ferner eine zweite Behandlungszone umfasst, wobei die erste und zweite Behandlungszone durch eine poröse Membran getrennt sind, wobei die wässrige organische Abfallflüssigkeit in die erste Behandlungszone eingelassen wird, um kohlenstoffbasiertes Adsorptionsmaterial in einem Bett in der ersten Behandlungszone mit einer Strömungsrate zu berühren, die ausreichend hoch ist, um die wässrige organische Abfallflüssigkeit durch das Bett aus kohlenstoffbasiertem Adsorptionsmaterial zu leiten, jedoch geringer als die Strömungsrate ist, die erforderlich ist, um das Bett aus kohlenstoffbasiertem Adsorptionsmaterial zu fluidisieren;
Betreiben einer ersten und zweiten Zuleitung für elektrischen Strom, die betätigbar mit der ersten bzw. der zweiten Behandlungszone verbunden sind, um elektrischen Strom in einer Richtung durch das kohlenstoffbasierte Adsorptionsmaterial innerhalb jeder Behandlungszone zu leiten, um das kohlenstoffbasierte Adsorptionsmaterial in der ersten Behandlungszone zu regenerieren;
Betreiben der Pumpe, um wässrige organische Abfallflüssigkeit in die zweite Behandlungszone einzulassen, um kohlenstoffbasiertes Adsorptionsmaterial in einem Bett der zweiten Behandlungszone mit einer Strömungsrate zu berühren, die ausreichend hoch ist, um die wässrige organische Abfallflüssigkeit durch das Bett aus kohlenstoffbasiertem Adsorptionsmaterial zu leiten, jedoch geringer als die Strömungsrate ist, die erforderlich ist, um das Bett aus kohlenstoffbasiertem Adsorptionsmaterial zu fluidisieren; und
Betreiben der ersten und zweiten Zuleitung für elektrischen Strom, um die Richtung des auf das kohlenstoffbasierte Adsorptionsmaterial in der ersten und zweiten Behandlungszone angewendeten elektrischen Stroms umzukehren, um das kohlenstoffbasierte Adsorptionsmaterial in der zweiten Behandlungszone zu regenerieren.

12. Verfahren nach Anspruch 11, wobei die wässrige organische Abfallflüssigkeit unter Druck stehend durch einen oder mehrere Einlässe in jedes Bett aus kohlenstoffbasiertem Adsorptionsmaterial eingelassen wird.

13. Verfahren nach Anspruch 12, wobei die wässrige organische Abfallflüssigkeit durch eine Vielzahl der Einlässe eingelassen wird, die durch einen ausreichenden Abstand voneinander beabstandet sind, um eine entsprechende Vielzahl von diskreten Flüssigkeitsströmungswegen durch das Bett aus kohlenstoffbasiertem Adsorptionsmaterial in jeder Behandlungszone zu bilden.

14. Verfahren nach einem der Ansprüche 11 bis 13, wobei Flüssigkeit, die das kohlenstoffbasierte Adsorptionsmaterial berührt hat, zu einem Behälter geleitet wird, der in Fluidverbindung mit dem entsprechenden Bett aus kohlenstoffbasiertem Adsorptionsmaterial steht.

15. Verfahren nach einem der Ansprüche 11 bis 14, wobei geladene anorganische Spezies während der Leitung des elektrischen Stroms durch das kohlenstoffbasierte Adsorptionsmaterial in der ersten und zweiten Behandlungszone erzeugt werden und die Stromzuleitungen und die Pumpe betrieben werden, um die Elektrodeposition der geladenen anorganischen Spezies auf den Stromzuleitungen während des Betriebs zu minimieren.

## Revendications

1. Appareil destiné au traitement d'un résidu liquide organique aqueux afin de produire un liquide traité contenant moins de matières organiques, ledit appareil comprenant
un réservoir de traitement définissant des première et deuxième zones de traitement séparées par une membrane poreuse,
un matériau adsorbant à base de carbone, capable d'une régénération électrochimique, fourni dans lesdites première et deuxième zones de traitement,
un agitateur pouvant servir à répartir le matériau adsorbant à base de carbone dans le résidu liquide organique aqueux contenu dans chacune des première et deuxième zones de traitement,
un premier dispositif d'alimentation en courant électrique raccordé de manière fonctionnelle au matériau adsorbant à base de carbone dans la première zone de traitement et un deuxième dispositif d'alimentation en courant électrique raccordé de manière fonctionnelle au matériau adsorbant à base de carbone dans la deuxième zone de traitement, et
un dispositif de commande pour amener les premier et deuxième dispositifs d'alimentation en courant électrique à faire passer un courant électrique à travers le matériau adsorbant à base de carbone dans les première et deuxième zones de traitement dans une direction afin de régénérer le matériau adsorbant à base de carbone dans l'une parmi les première et deuxième zones de traitement et à ensuite inverser la direction du courant appliqué au matériau adsorbant à base de carbone dans les première et deuxième zones de traitement afin de régénérer le matériau adsorbant à base de carbone dans l'autre parmi les première et deuxième zones de traitement.

2. Appareil selon la revendication 1, dans lequel l'agitateur comprend une chambre, définissant une ou plusieurs entrée(s) et une pompe, en dessous du réservoir de traitement pour fournir un fluide sous pression à travers ladite ou lesdites entrées.

3. Procédé destiné au traitement d'un résidu liquide organique aqueux afin de fournir un liquide traité contenant moins de matières organiques, le procédé comprenant les étapes consistant à
recevoir le résidu liquide organique aqueux dans des première et deuxième zones de traitement d'un réservoir de traitement, les première et deuxième zones de traitement étant séparées par une membrane poreuse, chaque zone de traitement contenant un matériau adsorbant à base de carbone capable d'une régénération électrochimique ;
répartir le matériau adsorbant à base de carbone dans le résidu liquide organique aqueux au sein de chaque zone de traitement ;
laisser reposer le matériau adsorbant à base de carbone au sein de chaque zone de traitement ;
amener les premier et deuxième dispositifs d'alimentation en courant électrique raccordés de manière fonctionnelle aux première et deuxième zones de traitement respectivement, à faire passer un courant électrique dans une direction à travers le matériau adsorbant à base de carbone au sein de chaque zone de traitement afin de régénérer le matériau adsorbant à base de carbone dans une parmi les première et deuxième zones de traitement ; et
amener les premier et deuxième dispositifs d'alimentation en courant électrique à inverser la direction du courant appliqué au matériau adsorbant à base de carbone dans les première et deuxième zones de traitement afin de régénérer le matériau adsorbant à base de carbone dans l'autre parmi les première et deuxième zones de traitement.

4. Procédé selon la revendication 3, dans lequel les étapes de répartition du matériau adsorbant à base de carbone dans le résidu liquide organique aqueux et de repos du matériau adsorbant à base de carbone sont répétées une ou plusieurs fois afin d'éliminer la matière organique à partir du résidu liquide organique aqueux préalablement à l'étape d'inversion, par les premier et deuxième dispositifs d'alimentation en courant électrique, de la direction du courant appliqué au matériau adsorbant à base de carbone.

5. Procédé selon la revendication 3 ou 4, dans lequel les étapes de répartition du matériau adsorbant à base de carbone dans le résidu liquide organique aqueux et de repos du matériau adsorbant à base de carbone sont répétées une ou plusieurs fois pour éliminer les matières organiques à partir du résidu liquide organique aqueux préalablement à l'étape de retrait du liquide traité à partir du réservoir de traitement.

6. Procédé selon l'une quelconque des revendications 3 à 5, dans lequel des espèces minérales chargées sont générées pendant le passage du courant électrique à travers le matériau adsorbant à base de carbone dans les première et deuxième zones de traitement et les dispositifs d'alimentation en courant électrique sont amenés à réduire au maximum l'électrodéposition desdites espèces minérales chargées sur les dispositifs d'alimentation en courant électrique en cours de fonctionnement.

7. Procédé selon l'une quelconque des revendication 3 à 6, dans lequel le résidu liquide organique aqueux contient des espèces radioactives.

8. Appareil destiné au traitement en continu d'un résidu liquide organique aqueux afin de fournir un liquide traité contenant moins de matières organiques, l'appareil comprenant
un réservoir de traitement définissant des première et deuxième zones de traitement séparées par une membrane poreuse,
un matériau adsorbant à base de carbone, capable d'une régénération électrochimique, fourni dans lesdites première et deuxième zones de traitement,
une pompe pouvant servir à recevoir un résidu liquide organique aqueux de manière sélective dans chacune desdites première et deuxième zones de traitement afin qu'il vienne en contact avec un matériau adsorbant à base de carbone dans la zone de traitement respective avec un débit qui est suffisamment élevé pour faire passer le résidu liquide organique aqueux à travers le matériau adsorbant à base de carbone mais qui est inférieur au débit requis pour fluidiser le matériau adsorbant à base de carbone,
un premier dispositif d'alimentation en courant électrique raccordé de manière fonctionnelle au matériau adsorbant à base de carbone dans la première zone de traitement et un deuxième dispositif d'alimentation en courant électrique raccordé de manière fonctionnelle au matériau adsorbant à base de carbone dans la deuxième zone de traitement, et
un dispositif de commande pour amener les premier et deuxième dispositifs d'alimentation en courant électrique à faire passer un courant électrique à travers le matériau adsorbant à base de carbone dans les première et deuxième zones de traitement dans une direction afin de régénérer le matériau adsorbant à base de carbone dans l'une parmi les première et deuxième zones de traitement et à ensuite inverser la direction du courant appliqué au matériau adsorbant à base de carbone dans les première et deuxième zones de traitement afin de régénérer le matériau adsorbant à base de carbone dans l'autre parmi les première et deuxième zones de traitement.

9. Appareil selon la revendication 8, dans lequel l'appareil comprend une ou plusieurs entrée(s) espacée(s) à travers laquelle ou lesquelles le liquide contaminé est reçu sous pression dans le lit de matériau adsorbant.

10. Appareil selon la revendication 9, dans lequel l'appareil comprend une pluralité desdites entrées espacées par une distance suffisante pour établir une pluralité correspondante de trajets d'écoulement de liquide discrets à travers le lit d'adsorbant.

11. Procédé destiné au traitement en continu d'un résidu liquide organique aqueux afin de fournir un liquide traité contenant moins de matières organiques, le procédé comprenant les étapes consistant à
amener une pompe à recevoir un résidu liquide organique aqueux dans une première zone de traitement d'un réservoir de traitement qui comprend également une deuxième zone de traitement, les première et deuxième zones de traitement étant séparées par une membrane poreuse, le résidu liquide organique aqueux étant reçu dans ladite première zone de traitement afin qu'il vienne en contact avec un matériau adsorbant à base de carbone dans un lit se trouvant dans la première zone de traitement avec un débit qui est suffisamment élevé pour faire passer le résidu liquide organique aqueux à travers le lit de matériau adsorbant à base de carbone mais qui est inférieur au débit requis pour fluidiser le lit de matériau adsorbant à base de carbone ;
amener des premier et deuxième dispositifs d'alimentation en courant électrique, raccordés de manière fonctionnelle aux première et deuxième zones de traitement respectivement, à faire passer un courant électrique dans une direction à travers le matériau adsorbant à base de carbone au sein de chaque zone de traitement afin de régénérer le matériau adsorbant à base de carbone dans ladite première zone de traitement ;
amener la pompe à recevoir un résidu liquide organique aqueux dans ladite deuxième zone de traitement afin qu'il vienne en contact avec le matériau adsorbant à base de carbone dans un lit se trouvant dans la deuxième zone de traitement avec un débit qui est suffisamment élevé pour faire passer le résidu liquide organique aqueux à travers le lit de matériau adsorbant à base de carbone mais qui est inférieur au débit requis pour fluidiser le lit de matériau adsorbant à base de carbone ; et
amener les premier et deuxième dispositifs d'alimentation en courant électrique à inverser la direction du courant appliqué au matériau adsorbant à base de carbone dans les première et deuxième zones de traitement afin de régénérer le matériau adsorbant à base de carbone dans la deuxième zone de traitement.

12. Procédé selon la revendication 11, dans lequel le résidu liquide organique aqueux est reçu sous pression à travers une ou plusieurs entrée(s) jusqu'à chaque lit de matériau adsorbant à base de carbone.

13. Procédé selon la revendication 12, dans lequel le résidu liquide organique aqueux est reçu à travers une pluralité desdites entrées espacées par une distance suffisante pour établir une pluralité correspondante de trajets d'écoulement de liquide discrets à travers le lit de matériau adsorbant à base de carbone dans chaque zone de traitement.

14. Procédé selon l'une quelconque des revendications 11 à 13, dans lequel on fait passer du liquide, qui est venu en contact avec le matériau adsorbant à base de carbone, vers un réservoir en communication fluidique avec le lit correspondant de matériau adsorbant à base de carbone.

15. Procédé selon l'une quelconque des revendications 11 à 14, dans lequel les espèces minérales chargées sont générées pendant le passage du courant électrique à travers le matériau adsorbant à base de carbone dans les première et deuxième zones de traitement et les dispositifs d'alimentation en courant électrique et la pompe sont amenés à réduire au maximum l'électrodéposition desdites espèces minérales chargées sur le dispositif d'alimentation en courant électrique en cours de fonctionnement.
